# EUROPEAN PATENT SPECIFICATION

(11) **EP 3 987 941 B1**
(45) Date of publication and mention of the grant of the patent: **27.08.2025**
(21) Application number: 20306244.3
(22) Date of filing: 20.10.2020
(51) Int. Cl.: A23L 7/113, A23L 29/219

(54) **LOW ACETYLATED PEA STARCH AS EGG WHITE REPLACER**
NIEDRIG ACETYLIERTE ERBSENSTÄRKE ALS EIWEISSERSATZ
AMIDON DE POIS FAIBLEMENT ACÉTYLÉ COMME SUBSTITUT DE BLANC D' OEUF

(43) Date of publication of application: 27.04.2022
(73) Proprietor: ROQUETTE FRERES, 62136 Lestrem (FR)
(72) Inventor: ITO, GOICHI, Koganei-city, Tokyo (JP)
(74) Representative: Plasseraud IP

(56) References cited:
- JP-A- 2015 002 690
- US-A1- 2018 160 707
- US-A1- 2018 317 530
- US-A1- 2019 297 927
- US-A1- 2020 245 653

## Description

The present invention provides a new composition for noodles containing low acetylated pea starch which replaces egg white proteins traditionally used in such a composition.

More particularly, the invention relates to a new composition for instant noodles and chilled noodles containing low acetylated pea starch.

It covers also the use of low acetylated pea starch to replace egg white proteins in such wheat flour based noodles.

### State of the art

The popularity of Asian noodles is increasing around the world, and the introduction of noodle products made from whole grain flour is considered as an effective way to modify customer's dietary pattern and promote high fiber food consumption.

Instant noodles were first introduced commercially in Japan in 1958 and from there the product rapidly spread to Korea and other Asian countries.

Today, instant noodles are consumed in more than 80 countries and of the many types of noodles, instant noodles are the fastest growing product due to their ease of preparation and convenience.

Instant noodles are different from other noodles by virtue of additional processing steps of steaming, frying or drying. These products can either be steamed and dried (instant dry noodle) or steamed and fried (instant fried noodle).

Another category of Asian noodles are traditional chilling or cold noodles. They are fresh noodle that are cooked and then chilled for 2 to 3 hours or overnight to remain extra chewy.

The Ingredients for instant noodles or chilled noodles are flour, eggs and water. But from these three ingredients, there are many possible combinations to create the right noodles.

The flour that is most commonly used is a high gluten bread flour milled from hard wheat, which contains a higher percentage of protein.

High gluten flour is more elastic than regular wheat flour, giving the noodles a chewier texture.

The eggs are added to hold the flour together, with the egg white proteins adding more springiness to the noodles while the egg yolk gives it a natural yellowish color.

Thus, as an auxiliary material, viscous modifiers such as egg white proteins are often used.

Egg white proteins have also been proposed in gluten-free pasta products (for example in GB2447978).

However, these proteins may cause allergic reactions in some people and may lead to an undesirable taste, especially when used at high levels.

Starch is widely used in food and industrial applications as a thickener, colloidal stabilizer, gelling agent, bulking agent and water retention agent.

To achieve desirable noodle texture, between 5 to 20 % of the wheat flour is usually replaced by starch.

There are two main categories of starch, namely native starch and modified starch.

Native starches (potato and tapioca) are less preferred by manufacturers due to their lack of stability under high temperature, shear, pH and refrigeration commonly applied during food processing. Such harsh conditions may lead to undesirable changes in product texture.

To overcome these problems, modified starches (for example acetylated starch) have been widely used. The advantages of acetylated starches are their low gelatinization temperature, high swelling and solubility as well as stability under freeze-thaw conditions.

Research on rice starch has indicated that acetylation increases solubility, swelling power and viscosity but decreases gelatinization temperature. Similar conclusions were drawn for acetylated cassava starches.

It was also found that acetylated potato starch could be used to improve the elasticity noodles. In particular, it was observed in white salted noodles (Japanese noodles) formulations, when up to 20% of wheat flour was replaced by acetylated potato starches (prepared from potato or sweet potato), the cooking loss (*i.e.* shrinkage of noodles during cooking) decreases, while the softness, stretchability and slippery character increase significantly.

The use of acetylated starch or hydroxypropylated starch for Instant noodles is well known. Noodles comprising acetylated starch are disclosed in e.g., JP 2015/002690A.

Today, most noodles manufacturers use acetylated potato or acetylated tapioca starch as the starch ingredient for their noodle.

Thus, to prepare wheat flour based noodles with good elastic texture, the man skilled in the art will use modified potato or tapioca starches.

However, wheat flour based noodles made with modified potato starch show sticky surface during the production process. Due to the sticky surface of the noodles, noodle strings bind together and prevent a successful drying process. In order to prevent the noodle strings from sticking, it is necessary to use additional ingredients or a specific process. As additional ingredients, egg white proteins are usually used as complementary gelling agent, but with a low efficacy.

Tapioca starch has the advantage of being cheaper than potato starch in the application of noodles. However, it increases the stickiness of the noodles and gives them a "mochi" type texture (sticky and/or gelatinous rice).

To remedy all these encountered difficulties, the solution proposed by the present invention consists in using acetylated pea starch, and more particularly a low acetylated (or weakly acetylated) pea starch, to replace egg white proteins.

### Summary of the invention

The invention concerns noodles based on wheat flour, containing acetylated pea starch having an acetyl value of less than 2%, which in the following is named "low acetylated pea starch", to replace egg white proteins.The noodles are either instant noodles or chilled noodles.

The noodles of the present invention show a very satisfactory texture, especially in terms of elasticity and especially even after a long time after cooking.

The low acetylated pea starch useful of the present invention is characterized by an acetyl value of less than 2%, between 0,25 and 1 %, more preferably between 0,55 and 1 %.

The invention also covers the use of the above-defined low acetylated pea starch to replace egg white proteins in wheat flour based noodles.

### Detailed description of the invention

The invention relates to the use of low acetylated pea starch as a substitute of egg white proteins for the preparation of wheat flour based noodles.

In its broadest extent the present invention relates to:
- Egg-white protein-free wheat flour noodles containing acetylated pea starch having a low degree of acetylation (low acetylated pea starch), wherein the acetyl value of the low acetylated pea starch is below 2%; and to the
- Use of acetylated pea starch having a low degree of acetylation to replace egg white proteins in wheat flour noodles, wherein the acetyl value of the low acetylated pea starch is below 2%.

In order to produce wheat flour based noodles with good texture after cooking, noodles producers typically use egg white proteins.

However, as previously said, the wheat flour based noodles comprising egg white proteins are not without risk in terms of allergenicity.

Alternatives to egg white proteins have been proposed by using either specific polymers like alginate or native pea starch.

The alginate is indeed hypoallergenic and has good gelling properties. However, this component is sensitive to heat and very hygroscopic, especially in powder form.

Furthermore, with regard to native pea starch, this starch is well known for its gelling properties due to its amylose content. However, the issue lies in the stability and resistance or strength of the gel obtained. In order to propose a new starch that could advantageously replace egg white proteins in the preparation of wheat based noodles, the inventor has conducted numerous experiments.

Starch modification is a classical way to alter the structure of starch.

Nevertheless, even low levels of modification are capable of dramatically altering the physical properties of starch, such as paste viscosity, gelling, syneresis, clarity, adhesion and emulsifying properties.

Stabilization of starch aims, for example, to prevent retrogradation by the introducion substituent groups.

The interactions of glucan chains in the starch granule are weakened by the introduction of the substituents and, consequently, hydration and gelatinization of starch by cooking is possible at lower temperatures.

The effectiveness of stabilization depends on the number and nature of the substituent groups.

Acetylation and hydroxypropylation are the main types of stabilization approved for food.

Among a great variety of starch esters, starch acetate is the one that is actively marketed.

The maximum permitted level of 2.5 % acetyl for food use (or an acetyl value of 2.5%) corresponds to a DS value of 0.1.

The steric disturbance of the acetyl group will facilitate and improve starch solubilization by lowering the energy level of the network created by the hydrogen bonds and will slow down the retrogradation.

The starch-starch interactions in the granule are weakened by the introduction of acetyl groups and, consequently, hydration and gelatinization by cooking is achievable at lower temperatures.

Theses starches are easy cooking and are particularly useful in low moisture environments and in applications where the moisture level is restricted by competition from co-ingredients, e.g. in extruded and coated snacks, frozen fish and cooked meat products, flour based noodles, bakery products and in a variety of frozen or cold stored ready-to-eat menus.

The acetyl group also generates a hydrophobic type of structure suitable for certain applications, including acid pH-resistant binders in the food industry, and adhesive and grease resistance in paper sizing.

Starch acetates are readily prepared by reacting the starch with acetic anhydride in the presence of diluted sodium hydroxide. Alternatively, vinyl acetate can be used for acetylation in aqueous suspension in the presence of sodium carbonate as catalyst.

In the present invention, the inventor has decided to test various acetylation levels of different starches such as pea, potato or tapioca starches.

All the difficulties are indeed based on the choice of the appropriate level of modification, able to satisfy the targeted objective.

Among the different starches tested, two acetylated pea starches have been particularly investigated, two acetylated pea starches commercialized by the applicant under the trademark:
∘ CLEARAM^{®} LG0005 (according to the present invention)
   ▪ Acetyl value: 0.32
   ▪ Substitution Degree: 0.012
   ▪ Gelatinization temperature: 72.95°C
∘ CLEARAM^{®} LG0020 (comparative)
   ▪ Acetyl value: 1.9
   ▪ Substitution Degree: 0.071
   ▪ Gelatinization temperature:67.9°C

In the present invention, the inventor has discovered that low acetylated pea starch can advantageously replace the egg white proteins in the preparation of noodles based on wheat flour.

The low acetylated pea starch useful in the present invention has an acetyl value of less than 2%, preferably between 0.25% and 1%, more preferably between 0.55 and 1%. This modified pea starch is significantly stronger than the native pea starch.

This result is unexpected, because normally such gelling property, especially the strength of retrogradated gel, is reduced when stabilization on the starch was performed by introducing substituent groups.

CLEARAM LG0005^{®} sold by the applicant is particularly useful for the present invention.

The breaking distance (or strain or deformation until the breaking point or at breaking point) that is obtained by a texture analyzer is one of the most important parameters for the texture of noodles.

If the breaking distance is large or big, the noodles will be sticky.

On the other hand, if the breaking distance is short or small, the noodles will be less elastic, like agar gel.

Therefore, the breaking distance is important to define the character or texture of the noodles.

Consumers are particularly attentive to the texture after cooking, once the noodles have cooled. Therefore, the inventor has checked in particular the shift or change of the breaking distance after cooking.

If the deformations are not too far apart, the texture of the noodles for the consumers does not seem to be changed. However, if the deformations are drastically different, changed, the character of the noodle texture will be altered.

The advantage of this invention is not only the improvement of the texture of the noodles just after cooking. The noodles of the present invention also have a very satisfactory texture not only immediately after cooking. They retain their texture during a long time after cooking, such as when proteins of white eggs are used.

The noodles according to the present invention are thus are free of egg proteins. They are either instant noodles or chilled noodles.

Another object of the present invention is the use of low acetylated pea starch having an acetyl value of less than 2% for replacing part of the wheat flour contained in noodles and/or for replacing part of the egg proteins contained in noodles and/or for improving the preservation of the texture of noodles based on wheat flour after cooking.

This invention will be better understood in light of the following examples which are given for illustrative purposes only and do not intend to limit the scope of the invention, which is defined by the attached claims.

### Example 1. Substitution of egg white proteins by low acetylated pea starch in instant noodle

The ingredients tested were the following:

### Proteins:

- Wheat flour, commercialized by NISHIN flour mills with Protein content 10-12%, Ash content 0.32 - 0.36%;
- Egg white powder (EW), Type K, commercialized by KEWPIE

### Starches:

- Native pea starch, commercialized by the applicant under the trademark: Pea starch N-735:
- Acetylated pea starch, commercialized by the applicant under the trademark:
   ∘ CLEARAM^{®} LG0005 (according to the present invention)
      ▪ Acetyl value: 0.32
      ▪ Substitution Degree: 0.012
   ∘ CLEARAM^{®} LG0020
      ▪ Acetyl value: 1.9
      ▪ Substitution Degree: 0.071
- Native potato starch HV, commercialized by the applicant.
- Acetylated potato starch CLEARAM^{®} PGHV, commercialized by the applicant
   ▪ Acetyl value: 1.64
   ▪ Substitution Degree: 0.062
- Native tapioca starch commercialized by YIAK SAY HANG FOOD in Singapore market.

The recipes tested are the following:

| | Native Tapioca starch | Native Pea starch | Native Potato HV starch | Native Tapioca starch+ EW 2% | Native Tapioca starch+ EW 1% | Native Tapioca starch + EW 5% | PGHV | LG0020 | LG0005 |
|---|---|---|---|---|---|---|---|---|---|
| A: Wheat flour | 845 | 845 | 845 | 845 | 845 | 845 | 845 | 845 | 845 |
| A : Native Tapioca starch | 150 | | | 150 | 150 | 150 | | | |
| A : Native Pea starch | | 150 | | | | | | | |
| A : Native Potato HV starch | | | 150 | | | | | | |
| A : Egg white powder (EW) | | | | 20 | 10 | 5 | | | |
| A : CLEARAM^{®} PGHV | | | | | | | 150 | | |
| A : CLEARAM^{®} LG0020 | | | | | | | | 150 | |
| A : CLEARAM^{®} LG0005 | | | | | | | | | 150 |
| A : Garlic powder | 5 | 5 | 5 | 5 | 5 | 5 | 5 | 5 | 5 |
| Sub-total | 1000 | 1000 | 1000 | 1020 | 1010 | 1005 | 1000 | 1000 | 1000 |
| B : NaCl | 15 | 15 | 15 | 15 | 15 | 15 | 15 | 15 | 15 |
| B : Kansui powder | 2 | 2 | 2 | 2 | 2 | 2 | 2 | 2 | 2 |
| B: Dry E-mix powder | 0.5 | 0.5 | 0.5 | 0.5 | 0.5 | 0.5 | 0.5 | 0.5 | 0.5 |
| B : Guar gum | 0.4 | 0.4 | 0.4 | 0.4 | 0.4 | 0.4 | 0.4 | 0.4 | 0.4 |
| B : Sodium triphosphate | 0.2 | 0.2 | 0.2 | 0.2 | 0.2 | 0.2 | 0.2 | 0.2 | 0.2 |
| B: Sodium pyrophosphate | 0.2 | 0.2 | 0.2 | 0.2 | 0.2 | 0.2 | 0.2 | 0.2 | 0.2 |
| B : Water | 340 | 340 | 340 | 340 | 340 | 340 | 340 | 340 | 340 |
| Total | 1358.3 | 1358. 3 | 1358.3 | 1378.3 | 1368.3 | 1363.3 | 1358.3 | 1358.3 | 1358.3 |

Seasoning recipe: (Added to all the above-mentioned recipes)

| | |
|---|---|
| C: Salt (g) | 4 |
| C: MSG (g) | 1.5 |
| C: Water (g) | 100 |
| Total (g) | 105.5 |

The preparation conditions are the following:
- Mix seasoning recipe, "C", to make seasoning.
- Heat the seasoning to dissolve all ingredients.
- Mix recipe "B" to obtain a liquid phase.
- Mix "A" well and add "B" to powder mixture "A" and mix for 10 min at 139 rpm.
- Compose the dough with a space of 8 mm for 3 times, using a rolling machine.
- Mature the sheeted dough for 30 min at room temperature.
- Roll as below to make a noodle sheet
   8 mm => 6.5 mm => 4 mm => 3 mm => 2 mm => 1.3 mm => 1.1mm
- And cut 1.25 mm wide
- Put 70 g of separated noodles in a colander.
- Steam for 2 min 15 sec at 98°C.
- Mix with 25 g pre-heated seasoning "C" well.
- Pack into the mould and deep fry for 2min 30 sec at 150°C

### Analysis methods

### Texture analyze method

The breaking distance (or strain or deformation until the breaking point or at breaking point) that is obtained by a texture analyzer is one of the most important parameters for the texture of noodles.

If the breaking distance is large or big, the noodles will be sticky.

On the other hand, if the breaking distance is short or small, the noodles will be less elastic, like agar gel.

Therefore, the breaking distance is important to define the character or texture of the noodles.

Consumers are particularly attentive to the texture after cooking, once the noodles have cooled. Therefore, the inventor has checked in particular the shift or change of the breaking distance after cooking.

If the deformations are not too far apart, the texture of the noodles for the consumers does not seem to be changed. However, if the deformations are drastically different, changed, the character of the noodle texture will be altered.

### Texture analyzer

1. Put one noodle string on the stage.
2. Measure texture by using TA. (Shimadzu EZ-SX)
   Condition : Plunger : Tooth shape chip
   Speed : 0.5mm/sec
   Sample size : 1 string

This data was measured at different times after cooking as follows:
1. Pour boiling water into cup with noodle and wait 3min.
2. Pick a part of noodle and measure it with the texture analyzer (TA).
3. 3min later, 6min after pouring the boiling water, pick a part of noodle strings and measure it with TA. [call 6min]
4. 3 min later, 9min after pouring the boiling water, pick a part of noodle strings and measure it with TA.

### Results

### Impact of various native starches on noodle texture, after cooking process

The results are presented below in Table 1.

**Table 1**

| | Time, after cooking (* storage at room temperature 25°C) | Distance of peak point [mm] | Changing of distance [Absolute score of change] [mm] |
|---|---|---|---|
| Native Tapioca | 3min | 1.77 | |
| | 6min | 2.295 | 0.525 |
| | 9min | 3.01 | 1.24 |
| | Total | | 1.765 |
| Native Potato HV | 3min | 2.51 | |
| | 6min | 2.215 | 0.295 |
| | 9min | 1.815 | 0.695 |
| | Total | | 0.99 |
| Native Pea | 3min | 2.57 | |
| | 6min | 2.31 | 0.26 |
| | 9min | 1.59 | 0.98 |
| | Total | | 1.24 |

It results from the results in Table 1 that the noodles with native tapioca starch show the biggest shifting of texture.

### Effect of egg white power

The results are presented in the Table 2.

**Table 2**

| | Time, after cooking | Distance of peak point [mm] | Changing of distance [Absolute score of change] [mm] |
|---|---|---|---|
| Native Tapioca | 3min | 1.77 | |
| | 6min | 2.30 | 0.53 |
| | 9min | 3.01 | 1.24 |
| | Total | | 1.77 |
| Native Tapioca+EW0.5% | 3min | 2.61 | |
| | 6min | 2.09 | 0.52 |
| | 9min | 1.94 | 0.67 |
| | Total | | 1.19 |
| Native Tapioca+EW1% | 3min | 2.27 | |
| | 6min | 2.23 | 0.04 |
| | 9min | 2.00 | 0.27 |
| | Total | | 0.32 |
| Native Tapioca+EW2% | 3min | 2.86 | |
| | 6min | 2.42 | 0.44 |
| | 9min | 1.83 | 1.03 |
| | Total | | 1.47 |

The function of egg white powder in noodle application is confirmed. The egg white powder reduces the change in texture after cooking process, the changing of distance.

### Effect of modified starches

The results are presented in the Tables 3 and 4

**Table 3**

| | Time, after cooking | Distance of peak point [mm] | Changing of distance [Absolute score of change] [mm] |
|---|---|---|---|
| CLEARAM^{®} PGHV | 3min | 2.935 | |
| | 6min | 2.58 | 0.355 |
| | 9min | 1.77 | 1.165 |
| | Total | | 1.52 |
| CLEARAM^{®} LG0005 | 3min | 2.105 | |
| | 6min | 2.235 | 0.13 |
| | 9min | 2.15 | 0.045 |
| | Total | | 0.175 |
| CLEARAM^{®} LG0020 | 3min | 2.295 | |
| | 6min | 1.92 | 0.375 |
| | 9min | 1.295 | 1 |
| | Total | | 1.375 |

**Table 4**

| | Changing of absolute distance [mm] | Changing of absolute distance, compare to each reference point [mm] |
|---|---|---|
| Native Tapioca | 1.77 | 0 |
| Native Tapioca+EW0.5% | 1.19 | -0.58 |
| Native Tapioca+EW1% | 0.32 | -1.45 |
| Native Tapioca+EW2% | 1.47 | -0.30 |
| Native Potato HV | 0.99 | 0 |
| CLEARAM^{®} PGHV | 1.52 | 0.53 |
| Native Pea | 1.24 | 0 |
| CLEARAM^{®} LG0005 | 0.18 | -1.07 |
| CLEARAM^{®} LG0020 | 1.38 | 0.14 |

The addition of Egg white powder (i.e. Egg White proteins) enable to reduce the changing of texture especially after cooking. This means it enables the maintenance of the texture of the noodles especially after cooking. However, it can be observed that when a too high percentage of Egg white powder is used, the egg white powder can no longer have this advantage, can no longer fulfil this function, or at least not as well.

Both tapioca starch and potato starch quickly change the texture of the noodles, which become soft and sticky after cooking.

The preferred property of noodle texture for consumers is elasticity. This elasticity will be lost quickly if tapioca starch or potato starch is used to make noodles. In addition, the texture of the noodles will be soft and sticky after cooking.

Therefore, in these cases, the use of egg white is one of the options for maintaining the texture of the noodles after cooking. However, the use of egg white or egg white protein can be a problem for people with allergies.

If pea starch or acetylated pea starch is used, the texture of the resulting noodles is quite pleasant for the consumer, even if he or she eats the noodles long after cooking them.

It is probably due to the high amylose content of pea starch and acetylated pea starch that the noodles will not have a sticky texture after cooking. Acetylated starch, so called stabilized starch enables to improve the texture of noodle in general. However, it can, in some cases, have a bad impact on the maintenance of noodle texture.

Only low acetylated pea starch has similar function with Egg white. The same tendency of texture changing is indeed observed.

On the contrary, a highly acetylated pea starch such as CLEARAM^{®} LG0020 leads to a big changing of the texture.

Thus, if low acetylated pea starch is used for the manufacture of noodles (i.e an acetylated pea starch with a acetyl value of less than 2%, such as CLEARAM^{®} LG0005), the use of white egg or more precisely egg white protein is no longer necessary.

### Example 2. Substitution of egg white proteins by low acetylated pea starch in chilled noodle

The ingredients are the same as in Example 1.

The recipes tested are the following:

| | control | Egg white 0.5% | Egg white 1% | Native Tapioca starch | Low acetylated tapioca starch | LG0005 | LG0020 | Native Pea |
|---|---|---|---|---|---|---|---|---|
| | Weight/batch | | | | | | | |
| Wheat flour | 500 | 500 | 500 | 450 | 450 | 450 | 450 | 450 |
| Egg white powder K | | 2.5 | 5 | | | | | |
| Native Tapioca starch | | | | 50 | | | | |
| Low acetylated Tapioca starch | | | | | 50 | | | |
| CLEARAM LG0005 | | | | | | 50 | | |
| CLEARAM LG0020 | | | | | | | 50 | |
| Native Pea starch | | | | | | | | 50 |
| Sub-total | 500 | 502.5 | 505 | 500 | 500 | 500 | 500 | 500 |
| Water | 165 | 165 | 165 | 165 | 165 | 165 | 165 | 165 |
| Salt | 20 | 20 | 20 | 20 | 20 | 20 | 20 | 20 |
| Total | 685 | 687.5 | 690 | 685 | 685 | 685 | 685 | 685 |

The preparation conditions are the following:
- Mix water and salt to obtain a liquid phase.
- Mix the powder phase well, and add the liquid phase to the powder mixture, and mix for 10 min at 139 rpm.
- Compose the dough as 8 mm gap for 3 times, using rolling machine.
- Mature the sheeted dough for 30 min at room temperature.
- Roll as below to make a noodle sheet:
   8 mm => 6.5 mm => 4 mm => 2.2 mm => 1.8 mm
- And cut 1.5mm wide. [Using rough shape cutter. Cutter number #8]

### Cooking process

- Boil the noodles with enough boiling water for 3 min.
- Put the noodles in ice water for 1min. to cool them down.
- Remove the water from noodle with a net, and evaluate the noodle texture with TA, by using a part of noodle sample. The rest of the sample was put on the dish and stored in the refrigerator, 4°C, for 2 hr.
- After 2 hours storage, the noodle texture was analyzed with TA.

### Results

### Texture analysis of noodle before and after storage

The results are presented in the Table 5.

**Table 5**

| | Time, after cooking | Distance of peak point [mm] | Hardness [Newtons] | Changing of distance [Absolute score of change] [mm] | Changing of hardness [Absolute score of change] [mm] |
|---|---|---|---|---|---|
| Control | Just cooked | 2.290 | 3.330 | | |
| | 2hr later | 1.995 | 1.110 | 0.30 | 2.22 |
| | Total | | | 0.30 | 2.22 |
| Egg white 0.5% | Just cooked | 2.270 | 3.123 | | |
| | 2hr later | 2.025 | 1.387 | 0.25 | 1.74 |
| | Total | | | 0.25 | 1.74 |
| Egg white 1% | Just cooked | 2.425 | 3.404 | | |
| | 2hr later | 2.240 | 0.911 | 0.19 | 2.49 |
| | Total | | | 0.19 | 2.49 |
| Native Tapioca starch | Just cooked | 1.570 | 2.763 | | |
| | 2hr later | 2.490 | 1.424 | 0.92 | 1.34 |
| | Total | | | 0.92 | 1.34 |
| Low acetylated Tapioca starch | Just cooked | 1.830 | 3.146 | | |
| | 2hr later | 2.350 | 1.074 | 0.52 | 2.07 |
| | Total | | | 0.52 | 2.07 |
| LG0005 | Just cooked | 2.170 | 3.247 | | |
| | 2hr later | 1.955 | 1.319 | 0.22 | 1.93 |
| | Total | | | 0.22 | 1.93 |
| LG0020 | Just cooked | 1.720 | 2.933 | | |
| | 2hr later | 2.625 | 1.205 | 0.91 | 1.73 |
| | Total | | | 0.91 | 1.73 |
| Native Pea starch | Just cooked | 1.655 | 2.342 | | |
| | 2hr later | 1.705 | 0.989 | 0.05 | 1.35 |
| | Total | | | 0.05 | 1.35 |

In the case of noodles prepared with tapioca starch, there is a significant difference in the distance.

Thus, the texture of the tapioca starch or acetylated tapioca starch noodle has been drastically changed.

In contrast, for noodles containing CLEARAM^{®} LG0005 (i.e a low acetylated pea starch), like noodles with tapioca starch and egg white, the change is less than that observed for noodles containing tapioca starch alone or less than that observed for noodles containing highly acetylated pea starch.

Thus, the texture of low acetylated pea starch noodles, especially after cooking, did not change to sticky.

Therefore, low acetylated pea starch such as CLEARAM^{®} LG0005 can be advantageously used as a substitute for egg white in the application of chilled or cooled noodles.

Native pea starch has also shown similar function, but highly acetylated pea starch, such as CLEARAM LG0020, has not shown as good a function.

## Claims

1. Egg-white protein-free wheat flour noodles containing pea starch with a low degree of acetylation (low acetylated pea starch), wherein the acetyl value of the low acetylated pea starch is below 2%.

2. The noodles of claim 1, **characterized in that** the noodles are instant noodles or chilled noodles.

3. The noodles of claim 1, **characterized in that** the acetyl value of the low acetylated pea starch is between 0,25 and 1 %, more preferably between 0,55 and 1 %.

4. Use of low acetylated pea starch to replace egg white proteins in wheat flour noodles, wherein the acetyl value of the low acetylated pea starch is below 2%.

5. Use of claim 4, **characterized in that** the noodles are instant noodles or chilled noodles.

6. Use of claim 4, **characterized in that** the acetyl value of the low acetylated pea starch is between 0,25 and 1 %, more preferably between 0,55 and 1 %.

## Patentansprüche

1. Eiweißproteinfreie Weizenmehlnudeln, enthaltend Erbsenstärke mit einem niedrigen Acetylierungsgrad (nieder-acetylierte Erbsenstärke), wobei der Acetylwert der nieder-acetylierten Erbsenstärke unter 2 % liegt.

2. Nudeln nach Anspruch 1, **dadurch gekennzeichnet, dass** die Nudeln Instantnudeln oder gekühlte Nudeln sind.

3. Nudeln nach Anspruch 1, **dadurch gekennzeichnet, dass** der Acetylwert der nieder-acetylierten Erbsenstärke zwischen 0,25 und 1 %, weiter bevorzugt zwischen 0,55 und 1 % liegt.

4. Verwendung von nieder-acetylierter Erbsenstärke, um Eiweißproteine in Weizenmehlnudeln zu ersetzen, wobei der Acetylwert der nieder-acetylierten Erbsenstärke unter 2 % liegt.

5. Verwendung nach Anspruch 4, **dadurch gekennzeichnet, dass** die Nudeln Instantnudeln oder gekühlte Nudeln sind.

6. Verwendung nach Anspruch 4, **dadurch gekennzeichnet, dass** der Acetylwert der nieder-acetylierten Erbsenstärke zwischen 0,25 und 1 %, weiter bevorzugt zwischen 0,55 und 1 % liegt.

## Revendications

1. Nouilles à base de farine de blé exemptes de protéine de blanc d' œuf contenant de l'amidon de pois présentant un faible degré d'acétylation (amidon de pois faiblement acétylé), dans lesquelles la valeur d'acétyle de l'amidon de pois faiblement acétylé est inférieure à 2 %.

2. Nouilles selon la revendication 1, **caractérisées en ce que** les nouilles sont des nouilles instantanées ou des nouilles froides.

3. Nouilles selon la revendication 1, **caractérisées en ce que** la valeur d'acétyle de l'amidon de pois faiblement acétylé est comprise entre 0,25 et 1 %, plus préférentiellement entre 0,55 et 1 %.

4. Utilisation d'amidon de pois faiblement acétylé pour remplacer des protéines de blanc d'œuf dans des nouilles à base de farine de blé, dans laquelle la valeur d'acétyle de l'amidon de pois faiblement acétylé est inférieure à 2 %.

5. Utilisation selon la revendication 4, **caractérisée en ce que** les nouilles sont des nouilles instantanées ou des nouilles froides.

6. Utilisation selon la revendication 4, **caractérisée en ce que** la valeur d'acétyle de l'amidon de pois faiblement acétylé est comprise entre 0,25 et 1 %, plus préférentiellement entre 0,55 et 1 %.
